(19) Europäisches Patentamt
European Patent Office
Office européen des brevets

(11) **EP 0 648 250 B1**

(12) **EUROPEAN PATENT SPECIFICATION**

(45) Date of publication and mention
of the grant of the patent:
**08.09.1999 Bulletin 1999/36**

(21) Application number: **93914087.7**

(22) Date of filing: **27.05.1993**

(51) Int Cl.⁶: **C09K 5/04**, C10M 171/00,
C10M 105/38

(86) International application number:
**PCT/US93/04888**

(87) International publication number:
**WO 93/24587 (09.12.1993 Gazette 1993/29)**

(54) **BLENDED POLYOL ESTER LUBRICANTS FOR REFRIGERANT HEAT TRANSFER FLUIDS**

POLYOL/ESTER-GEMISCH ALS SCHMIERMITTEL FÜR WÄRMETRÄGERFLÜSSIGKEITEN IN KÄLTEANLAGEN

LUBRIFIANTS MELANGES D'ESTERS POLYOLS SERVANT DE FLUIDE D'ECHANGE THERMIQUE POUR LA REFRIGERATION

(84) Designated Contracting States:
**AT BE CH DE DK ES FR GB GR IE IT LI LU MC NL PT SE**

(30) Priority: **03.06.1992 WOPCT/US92/04438**
**10.03.1993 US 29204**

(43) Date of publication of application:
**19.04.1995 Bulletin 1995/16**

(73) Proprietor: **HENKEL CORPORATION**
**Plymouth Meeting, PA 19462 (US)**

(72) Inventors:
• **SCHNUR, Nicholas, E.**
**Cincinnati, OH 45238 (US)**
• **ZEHLER, Eugene, R.**
**West Chester, OH 45069 (US)**

(74) Representative:
**von Kreisler, Alek, Dipl.-Chem. et al**
**Patentanwälte,**
**von Kreisler-Selting-Werner,**
**Bahnhofsvorplatz 1 (Deichmannhaus)**
**50667 Köln (DE)**

(56) References cited:
**EP-A- 0 406 479**     **EP-A- 0 430 657**
**EP-A- 0 435 253**     **EP-A- 0 440 069**
**EP-A- 0 448 402**     **EP-A- 0 458 584**
**EP-A- 0 499 994**     **US-A- 3 523 084**
**US-A- 3 564 044**     **US-A- 3 694 382**
**US-A- 4 851 144**     **US-A- 5 021 179**
**US-A- 5 185 092**

**Description**

BACKGROUND OF THE INVENTION

Field of the Invention

This invention relates to lubricant base stocks, which can also serve as complete lubricants in some cases; compounded lubricants, which include at least one additive for such purposes as improving high pressure and/or wear resistance and corrosion inhibition along with the lubricant base stocks which contribute the primary lubricity to the lubricants; refrigerant working fluids including lubricants according to the invention along with primary heat transfer fluids; and methods for using these materials. The lubricants and lubricant base stocks are generally suitable for use with most or all halocarbon refrigerants and are particularly suitable for use with substantially chlorine-free, fluoro-group-containing organic refrigerating heat transfer fluids such as pentafluoroethane, 1,1-difluoroethane, 1,1,1-trifluoroethane, and tetrafluoroethanes, most particularly 1,1,1,2-tetrafluoroethane.

Statement of Related Art

Chlorine-free heat transfer fluids are desirable for use in refrigerant systems, because their escape into the atmosphere causes less damage to the environment than the currently most commonly used chlorofluorocarbon heat transfer fluids such as trichlorofluoromethane and dichlorodifluoromethane. The widespread commercial use of chlorine-free refrigerant heat transfer fluids has been hindered, however, by the lack of commercially adequate lubricants. This is particularly true for one of the most desirable working fluids, 1,1,1,2-tetrafluoroethane, commonly known in the art as "Refrigerant 134a" or simply "R134a". Other fluoro-substituted ethanes are also desirable working fluids.

The following patents and published patent applications also teach many general classes and specific examples of polyol esters as useful refrigerant lubricants with chlorine-free fluoro group containing heat transfer fluids: US-A-4,851,144; GB-A-2 216 541; US-A-5,021,179; US-A-5,096,606; WO-A-90/12849 (Lubrizol); EP-A-0 406 479 (Kyodo Oil); EP-A-0 430 657 (Asahi Denka KK); EP-A-0 435 253 (Nippon Oil); EP-A-0 445 610 and 0 445 611 (Hoechst AG); EP-A-0 449 406 (Tonen Corp.); EP-A-0 458 584 (Unichema Chemie BV); and EP-A-0 485 979 (Hitachi).

DESCRIPTION OF THE INVENTION

A wide variety of viscosities and other physical and chemical properties are needed to achieve optimal effectiveness of lubricants in the many different types of refrigeration equipment in practical use.

For example, home refrigerators of the normal type generally are required to maintain cool temperatures within a relatively small and well insulated space, and the temperature of their environment, to which waste heat must be discharged, does not normally vary over a wide range, because it usually is a temperature in which humans can be reasonably comfortable. Therefore, relatively low power compressors are generally employed for such normal home refrigerators, and lubricants with relatively low viscosities at normal human comfort temperatures are generally satisfactory, because the environmental temperature never rises very high, so that any drastic decrease in viscosity of the lubricant with temperature is largely avoided. Under such conditions, low viscosity lubricants are preferred for economy of operation, because with all other factors held equal, a low viscosity lubricant reduces power consumption by the lubricated machinery, and, with the rising cost of electric power, consumers are becoming more sensitive to efficiency in their home appliances.

On the other hand, an automobile air conditioner may easily be exposed to an outdoor temperature of -20° C or less in winter in a normal temperate zone continental climate, while in summer it must discharge heat to an environment inside the engine compartment of the automobile that may reach a much higher temperature than would ever be encountered in the environment of a home refrigerator in normal use. Therefore, a lubricant with the viscosity preferred for a high efficiency home refrigerator would have too low a viscosity at summer operating temperatures to be an effective lubricant in most automotive air conditioner applications. Refrigeration equipment for large scale industrial use or commercial use, such as in an ice-making plant or a large facility for quick freezing food, because of the high mechanical power needed, usually requires a lubricant with even more viscosity than that needed for an automotive air conditioner. Also, screw compressors generally need higher viscosity lubricants than reciprocating compressors of the same capacity.

Esters of hindered polyols, which are defined for this purpose as organic molecules containing at least five carbon atoms, at least 2 -OH groups, and no hydrogen atoms bonded directly to any carbon atom that is directly bonded to a carbon atom bearing an -OH group, have already been recognized in the art as high quality lubricant basestocks for almost any type of refrigeration machinery employing a fluorocarbon refrigerant, particularly one free from chlorine. The approach of the prior art has generally been to provide for each particular class of lubricant service a single type of polyol ester, or a mixture of such esters made by a single step reaction between one or more hindered polyols and one or more acids. This approach is capable of providing satisfactory performance, but it has the disadvantage that a wide variety of individual mixtures is required to cover all the wide variety of conditions of service as already noted.

Under the laws of many countries, any new chemical has to be tested for safety before it can legally be sold for general use, and any material made by reacting new mixtures of ingredients is usually defined as a new chemical. Therefore, every distinct mixture of polyol esters made by a single step reaction is likely to have to be tested and registered by several government agencies, at very substantial expense for each such distinct mixture, in order to be legally sold in all advanced countries with laws requiring such registration.

On the other hand, mechanical mixtures of previously registered chemicals are often exempted from legal requirements for registration, or at least subjected to less extensive, and therefore less expensive, testing than is required for mixtures legally defined as new chemicals. There is therefore a technical and economic incentive to provide lubricant base stocks suitable for most or all of the wide variety of conditions of lubricant service by blending from the smallest possible number of chemical components.

It has now been found that high quality lubricants with a very wide variety of viscosity grades can be obtained by blending at least two of only three carefully selected types of blending stock polyol esters.

The compositions according to the invention consisting essentially of these selected types of blending stock polyol esters are defined in claims 1 to 5.

The first of these three types ("Type 1"), with the lowest viscosity of the three, is an ester or mixture of esters made by reacting (i) a mixture of alcohol molecules consisting of molecules selected from of 2,2-dimethylpropane-1,3-diol (also called "neopentyl glycol" and often abbreviated hereinafter as "NPG"), 2,2-dimethylol-1-butanol (also called "trimethylolpropane" and often abbreviated hereinafter as "TMP"), 2,2-dimethylol-1-propanol (also called "trimethylol ethane" and often abbreviated hereinafter as "TME"), and 2,2-dimethylolpropane-1,3-diol (also called "pentaerythritol" and often abbreviated hereinafter as "PE") with (ii) a mixture of acid molecules in which at least 75 % of the molecules are selected from butanoic acid, 2-methylpropanoic acid, pentanoic acid, 2-methylbutanoic acid, and 3-methylbutanoic acid and the balance of the acid molecules are selected from other monobasic straight chain carboxylic acids with not more than six carbon atoms and other monobasic branched chain carboxylic acids with not more than nine carbon atoms. (Of course, for this and all the other types of esters described herein as part of the invention, it is possible to obtain the same esters or mixture of esters by reacting acid derivatives such as acid anhydrides, acyl chlorides, and esters of the acids with lower molecular weight alcohols than those desired in the ester products according to this invention, instead of reacting the acids themselves. The acids are generally preferred for economy and are normally specified herein, but it is to be understood that the esters defined herein by reaction with acids can be equally well obtained by reaction of alcohols with the corresponding acid derivatives.)

For this and all the other types of esters described herein as part of the invention, it is to be understood that only the desired alcohols and acids are explicitly specified, but some amount of the sort of impurities normally present in commercial or industrial grade products can be tolerated in most cases. For example, "commercial di-pentaerythritol" normally contains only 82 - 90 mole % of pure di-pentaerythritol, along with 5 - 9 mole % of tri-pentaerythritol, and 5 - 9 mole % of PE, and it is quite satisfactory for making high viscosity esters in many cases. (Di-pentaerythritol, often abbreviated hereinafter as "DPE", is a molecule with six hydroxyl groups and one ether bond, formally derived from two PE molecules by removing one hydroxyl group from one of the PE molecules and one hydrogen atom from a hydroxyl group of the other PE molecule to form water and join the two remainders of the original PE molecules with an ether bond. Tri-pentaerythritol, often abbreviated hereinafter as "TPE", is a molecule with eight hydroxyl groups and two ether bonds, formally derived from three PE molecules by an analogous elimination of the elements of two molecules of water as described above, for elimination of a single water molecule, for DPE.)

In general, however, it is preferred, with increasing preference in the order given, that not more than 25, 21, 17, 12, 8, 5, 3, 2, 1, 0.5, or 0.2 % of either the hydroxyl groups in the alcohol mixtures specified herein or of the carboxyl groups in the acid mixtures specified herein should be part of any molecules other than those explicitly specified for each type of blending stock. Percentages of specific chemical molecules or moieties specified herein, such as the percentages of carboxyl and hydroxyl groups stated in the preceding sentence, are to be understood as number percentages, which will be mathematically identical to percentages by chemical equivalents, with Avogadro's number of each specified chemical moiety regarded as a single chemical equivalent.

With increasing preference in the order given, at least 45, 62, 78, 89, or 95 % of the alcohol molecules reacted to make the Type 1, lowest viscosity, ester blending stock to be used according to this invention are TMP, PE, or a mixture thereof. With increasing preference in the order given, at least 51, 67, 85, 92, 97, or 99 % of the acid molecules reacted to make the Type 1 ester blending stock are selected from acids containing five carbon atoms per molecule, and independently, with increasing preference in the order given, at least 60, 72, 84, 93, or 97 % of the total of the five carbon acid molecules in this acid component consist of pentanoic acid (straight chain).

These preferences were determined by taking into account a wide variety of factors determined empirically, including the following generalizations: Branched acids give esters with a lower viscosity index, but with usually higher absolute viscosities at normal ambient human comfort temperatures or any lower temperature, than unbranched acids with the same number of carbon atoms. Alcohols with two hydroxyl groups yield esters with lower viscosities than those with three hydroxyl groups. Acids with six or more carbon atoms yield esters with more viscosity than those with fewer carbon atoms, and acids.with four or, especially, fewer than four, carbon atoms are substantially more easily hydrolyzed during use than those with higher numbers of carbon atoms; such hydrolysis is disadvantageous, because the acid produced by hydrolysis promotes damaging corrosion of at least some of the types of metal surfaces normally being lubricated. Also, the corrosiveness of a carboxylic acid to most metals found in refrigerator compressors increases as the number of carbon atoms in the acid molecule decreases.

As a result of these various factors, the esters of TMP and/or PE with pentanoic acid have been found to be close to ideal as low viscosity blending stocks, because they are about as low in viscosity as is ever normally desirable for existing refrigerating machinery, are miscible in all proportions with most or all fluorocarbon refrigerants over a temperature range of at least -55° C up to at least the boiling point of the fluorocarbon refrigerant at normal atmospheric pressure and often to still higher temperatures which can easily be reached in the compression stage of a refrigerator, are capable of solubilizing other higher viscosity and less soluble hindered polyol esters, are very effective in reducing the viscosity of the other types of blending stock with which they may be mixed, and are substantially less likely than esters of acids with fewer than five carbon atoms per molecule to promote corrosion.

The second type of blending stock according to this invention ("Type 2"), one with an intermediate viscosity range, is an ester or mixture of esters made by reacting (i) a mixture of alcohol molecules selected from the group consisting of TMP; di-trimethylolpropane (often abbreviated hereinafter as "DTMP"), a molecule with four hydroxyl groups and one ether linkage, formally derived from two molecules of TMP by removing one hydroxyl group from one of the TMP molecules and one hydrogen atom from a hydroxyl group of the other TMP molecule to form water and join the two remainders of the original TMP molecules with an ether bond; PE; and DPE, with (ii) a mixture of acid molecules selected from the group consisting of all the straight and branched chain monobasic and dibasic carboxylic acids with from four to twelve carbon atoms each, with the constraints that (a) a total of at least 3 %, or, with increasing preference in the order given, at least 7, 10, 14, 21, or 28 %, of the acid molecules in the mixture are molecules of 2-methylbutanoic and/or 3-methylbutanoic acids, which are jointly abbreviated hereinafter as "i-$C_5$ acid"; (b) the ratio of the % of acid molecules in the mixture that contain 8 or more carbon atoms and are unbranched to the % of acid molecules in the mixture that are both branched and contain not more than six, preferably not more than five, carbon atoms is not greater than 1.56, more preferably not greater than 1.21, or still more preferably not greater than 1.00; (c) the % of acid molecules in the mixture that contain at least nine carbon atoms, whether branched or not, is not greater than 81, or increasingly more preferably, not greater than 67 or 49; and (d) either (d)(1) a total of at least 20, or, with increasing preference in the order given, at least 29, 35, or 41 % of the acid molecules in the mixture are selected from the trimethylhexanoic acids, or most preferably are 3,5,5-trimethylhexanoic acid; not more than 14, or, with increasing preference in the order given, not more than 10, 7, 3, 1, or 0.4 % of the carboxyl groups in the acid mixture are part of dibasic acids; and not more than 2, more preferably not more than 1, or still more preferably not more than 0.5, % of the carboxyl groups in the acid mixture are part of acid molecules with more than two carboxyl groups each; or (d)(2) at least 3, or with increasing preference in the order given, at least 5, 7, 10, or 14 %, but not more than 18 %, of the carboxyl groups in the acid mixture are part of dibasic acid molecules; not more than 2, more preferably not more than 1, or still more preferably not more than 0.5, % of the carboxyl groups in the acid mixture are part of acid molecules with more than two carboxyl groups each; and a total of at least 82, or with increasing preference in the order given, at least 85, 89, 93, 96, or 99 % of the monobasic acid molecules in the acid mixture have either five or six, or more preferably exactly five, carbon atoms each.

Preferably, in the mixtures reacted to make this Type 2 blending stock, with increasing preference in the order given, at least 60, 75, 85, 90, 95, or 98 % of the hydroxyl groups in the mixture are part of PE molecules. Independently, in the mixtures reacted to make the Type 2 blending stock, with increasing preference in the order given, at least 60, 75, 85, 90, 95, or 98 % of the monobasic acid molecules in the acid mixture consist of molecules having no more than ten carbon atoms each and, with increasing preference in the order given, at least 60, 75, 85, 90, 95, or 98 % of the dibasic acid molecules in the acid mixture consist of molecules having no more than ten carbon atoms each, or more preferably from five to seven carbon atoms each. Most preferably, with increasing preference in the order given, a total of at least 60, 75, 85, 90, 95, or 98 % of the monobasic acid molecules in the acid mixture consist of molecules having either exactly five or exactly nine carbon atoms each.

As with the Type 1 blending stock, these preferences for the Type 2 blending stock are based on empirically determined generalizations. In order to achieve the desired middle range of viscosity, corresponding at least approximately to ISO grades 32 - 46, it is advantageous to have a substantial fraction of alcohols with at least four hydroxyl groups. Among the commercially available hindered alcohols that satisfy this criterion, PE is less expensive than DTMP and is free from the ether linkage in DTMP, which increases the hygroscopicity of the esters formed and thereby may promote undesirable corrosion of the metal surfaces lubricated. Alcohols with more than four hydroxyl groups produce esters with higher than optimum viscosities, but some such esters can be tolerated, and mixtures including them may be cheaper. Commercial grade PE often contains a substantial amount of DPE, and costs at least a little less than more purified PE. When cost factors are not severely constraining, removing most or all of the DPE from a predominantly PE mixture of alcohols used to make the esters is preferable, in order to minimize the chance of insolubility of part of the ester mixture at low temperatures.

In order to obtain Type 2 esters with adequate viscosity, a considerable fraction of the acid molecules reacted need to have eight or more carbon atoms or be dibasic. Dibasic acids are less desirable. They must be used, if at all, in rather small amounts in order to avoid excessive viscosity, because of the capability of forming very high molecular weight and very viscous oligomers or polymers by reaction between alcohol and acid molecules that both have at least two functional groups. In practice, it has been found that the amount of dibasic acid that can be effectively used in the acid mixture reacted to make a Type 2 blending stock used according to this invention is substantially less than the amount that would be sufficient to provide at least one dibasic acid group to link each two alcohol molecules in the alcohol mixture also reacted. Therefore, when such amounts of dibasic acid are used, some of the alcohol molecules will be joined together in the esters formed and some will not; the esters with two or more alcohol moieties will be much more viscous and normally less readily soluble in the fluorocarbon refrigerant fluids than the other esters in the mixture, those with only one alcohol moiety, thereby increasing the risk of undesirable phase separation in the course of use of the esters.

When substantially only monobasic acids are used to make the esters in the Type 2 blending stock, as already noted, in order to obtain adequate viscosity in the mixture, a substantial fraction of the acid molecules must have at least eight carbon atoms. With acids of such length, solubility in the fluorocarbon refrigerant fluids is less than for esters with shorter acids, and this reduced solubility is particularly marked for straight chain acids, so that a substantial fraction of the longer acids normally needs to be branched; alternatively, it has been found that these longer straight chain acids can be "balanced" for solubility with an equal or not too much less than equal fraction of branched acids with five or six carbon atoms. When the number of carbon atoms per molecule is nine or more, not even branching is sufficient to produce adequate solubility by itself, so that an upper limit on the fraction of such acids is independently required. In general, a minimum amount of the particularly advantageous i-$C_5$ acid is specified to aid in solubilizing the parts of the esters in the mixture that contain dibasic acids or those with eight or more carbon atoms.

For both performance and economic reasons, it has been found that five and nine carbon monobasic acids are the most preferred constituents, and they are very effective in balancing each other to achieve a mix of viscosity and solubility characteristics that is better suited than others to most applications. Trimethylhexanoic acids, with their three methyl branches, produce the most soluble esters among the readily available nine carbon acids. (In general, methyl branches are the most effective in promoting solubility without increasing viscosity excessively, because of the larger number of carbon atoms in other branching groups.) Branches on the carbon alpha to the carboxyl increase the difficulty of esterification and do not appear to be any more effective in increasing solubility than more remotely located branches. The most economical commercially available mixture of branched nine carbon acids, which contains from 88 - 95 mole % of 3,5,5-trimethylhexanoic acid with all but at most 1 mole % of the remainder being other branched $C_9$ monobasic acids, appears at least as effective as any other and is therefore preferred for economic reasons as the source of $C_9$ monobasic acids.

The third, highest viscosity, blending stock ester or ester mixture ("Type 3") to be used according to this invention is made by reacting (i) a mixture of alcohol molecules selected from the group consisting of TMP; DTMP; PE; DPE; TPE; and tri-trimethylolpropane (hereinafter often abbreviated as "TTMP"), a molecule with five hydroxyl groups and two ether bonds, formally derived from three TMP molecules by elimination of the elements of two molecules of water as described above for TPE, with (ii) a mixture of acid molecules selected from the group consisting of all the straight or branched chain monobasic carboxylic acids with five or six carbon atoms each, the singly or multiply branched chain monobasic carboxylic acids with from seven to thirteen carbon atoms each, and the dibasic carboxylic acids with four to ten carbon atoms each, subject to one of the groups of constraints (a) that (a)(1) at least 19 %, or, with increasing preference in the order given, at least 23, 27, 29, or 33 %, of the carboxyl groups in the acid mixture are part of dibasic acid molecules, (a)(2) at least 75 %, or, with increasing preference in the order given, at least 82, 89, 95, or 98 % of the carboxyl groups in the acid mixture that are part of monobasic acid molecules are part of monobasic acid molecules with five carbon atoms each, and (a) (3) the % of the carboxyl groups in the acid mixture that are part of an i-$C_5$ acid is at least 34, or with increasing preference in the order given, at least 45, 57, 70, 85, 93, 108, 119, 130, or 135, % of the % of the carboxyl groups in the acid mixture that are part of dibasic acid molecules; or (b) that (b)(1) not more than 14, or, with increasing preference in the order given, not more than 10, 7, 3, 1, or 0.4 % of the carboxyl groups in the acid mixture are part of dibasic acids; (b)(2) at least 82, or, with increasing preference in the order given, at least 84, 88, 92, or 96, % of the carboxyl groups in the acid mixture are part of monobasic acids containing at least nine carbon atoms and at least one branch; and (b)(3) at least 60, or, with increasing preference in the order given, at least 71, 84, 88, 92, or 96, % of the carboxyl groups in the acid mixture are part of trimethyl hexanoic acid molecules, most preferably part of 3,5,5-trimethylhexanoic acid molecules.

Preferably, in the mixtures reacted to make the Type 3 blending stock, with increasing preference in the order given, at least 98 % of the hydroxyl groups in the mixture are part of PE or DPE molecules, and of these at least 80 %, preferably at least 85% are PE molecules.

The above descriptions for each of the acid and alcohol mixtures reacted to produce one of the three hindered polyol ester blending stocks refers only to the mixture of acids or alcohols that actually reacts to form esters and does not necessarily imply that the mixtures of acids or alcohols contacted with each other for the purpose of reaction will have the same composition as the mixture that actually reacts. In fact, it has been found that reaction between the alcohol(s) and the acid(s) used proceeds more effectively if the quantity of acid charged to the reaction mixture initially is enough to provide an excess of 10 - 25 % of equivalents of acid over the equivalents of alcohol reacted with the acid. (An equivalent of acid is defined for the purposes of this specification as the amount containing one gram equivalent weight of carboxyl groups, while an equivalent of alcohol is the amount containing one gram equivalent weight of hydroxyl groups.) If the acid component reacted contains both monovalent and higher valent acids, the excess preferably is made up of monovalent acids alone. The composition of the mixture of acids that actually reacted can be determined by analysis of the product ester mixture for its acyl group content.

In making most or all of the esters and mixtures of esters preferred for use as blending stocks according to this invention, the acid(s) reacted will be lower boiling than the alcohol(s) reacted and the product ester(s). When this condition obtains, it is preferred to remove the bulk of any excess acid remaining at the end of the esterification reaction by distillation, most preferably at a low pressure such as 133.32 Pa - 666.6 Pa (1 - 5 torr).

After such vacuum distillation, the product is often ready for use as a lubricant blending stock according to this invention. If further refinement of the product is desired, the content of free acid in the product after the first vacuum distillation may be further reduced by treat-ment with epoxy esters as taught in U. S. -A- 3,485,754 or by neutralization with any suitable alkaline material such as lime, alkali metal hydroxide, or alkali metal carbonates. If treatment with epoxy esters is used, excess epoxy ester may be removed by a second distillation under very low pressure, while the products of reaction between the epoxy ester and residual acid may be left behind in the product without harm. If neutralization with alkali is used as the refinement method, subsequent washing with water, to remove any unreacted excess alkali and the small amount of soap formed from the excess fatty acid neutralized by the alkali, is strongly preferred before using the product as a lubricant and/or base stock according to this invention.

Ester base stocks according to this invention consist essentially of at least 5, more preferably at least 10, still more preferably at least 15, % by weight of each of at least two of blending stock Types 1, 2, and 3 as defined and described above. In order to have the greatest practical value, it is preferred that the Type 1 blending stock have a viscosity of not more than 0.18 $m^2$/s (18), or preferably not more than 0.16 $m^2$/s (16 centistokes) at 40° C, and for the same reason it is independently preferred that the Type 3 blending stock have a viscosity of at least 0.9 $m^2$/s (90 centistokes) at 40° C. Also, it is independently preferred that a blended lubricant ester base stock according to this invention have a viscosity $V_B$ at 40° C that has the following relationship to the viscosities $V_L$ and $V_H$ at 40° C of the lowest and highest viscosity ones respectively of the two or three blending stocks from which the blended ester is composed:

$$(1+x)V_L \leq V_B \leq (1-x)V_H,$$

where x is a number and, with increasing preference in the order given, x = 0.02, 0.04, 0.07, 0.10, 0.15, or 0.20. Additionally and independently, it is preferable for the blending stocks according to this invention to be selected so that a blend of any ISO grade between 22 and 68, or more preferably, any ISO grade between 16 and 100, inclusive, may be prepared from the three blending stocks.

Under some conditions of use, the ester(s) as described herein will function satisfactorily as complete lubricants. It is generally preferable, however, for a complete lubricant to contain other materials generally denoted in the art as additives, such as oxidation resistance and thermal stability improvers, corrosion inhibitors, metal deactivators, lubricity additives, viscosity index improvers, pour and/or floc point depressants, detergents, dispersants, antifoaming agents, anti-wear agents, and extreme pressure resistant additives. Many additives are multifunctional. For example, certain additives may impart both anti-wear and extreme pressure resistance properties, or function both as a metal deactivator and a corrosion inhibitor. Cumulatively, all additives preferably do not exceed 8 % by weight, or more preferably do not exceed 5 % by weight, of the total compounded lubricant formulation.

An effective amount of the foregoing additive types is generally in the range from 0.01 to 5 % for the antioxidant component, 0.01 to 5 % for the corrosion inhibitor component, from 0.001 to 0.5 % for the metal deactivator component, from 0.5 to 5 % for the lubricity additives, from 0.01 to 2 % for each of the viscosity index improvers and pour and/or floc point depressants, from 0.1 to 5 % for each of the detergents and dispersants, from 0.001 to 0.1 % for anti-foam agents, and from 0.1 - 2 % for each of the anti-wear and extreme pressure resistance components. All these percentages are by weight and are based on the total lubricant composition. It is to be understood that more or less than the stated amounts of additives may be more suitable to particular circumstances, and that a single molecular type or a mixture of types may be used for each type of additive component. Also, the examples listed below are intended to be merely illustrative and not limiting, except as described in the appended claims.

Examples of suitable oxidation resistance and thermal stability improvers are diphenyl-, dinaphthyl-, and phenylnaphthyl-amines, in which the phenyl and naphthyl groups can be substituted, e.g., N,N'-diphenyl phenylenediamine, p-octyldiphenylamine, p,p-dioctyldiphenylamine, N-phenyl-1-naphthyl amine, N-phenyl-2-naphthyl amine, N-(p-dodecyl)phenyl-2-naphthyl amine, di-1-naphthylamine, and di-2-naphthylamine; phenothazines such as N-alkylphenothiazines; imino(bisbenzyl); and hindered phenols such as 6-(t-butyl) phenol, 2,6-di-(t-butyl) phenol, 4-methyl-2,6-di-(t-butyl) phenol and 4,4'-methylenebis(-2,6-di-{t-butyl} phenol).

Examples of suitable cuprous metal deactivators are imidazole, benzamidazole, 2-mercaptobenzthiazole, 2,5-dimercaptothiadiazole, salicylidine-propylenediamine, pyrazole, benzotriazole, tolutriazole, 2-methylbenzamidazole, 3,5-dimethyl pyrazole, and methylene bis-benzotriazole. Benzotriazole derivatives are preferred. Other examples of more general metal deactivators and/or corrosion inhibitors include organic acids and their esters, metal salts, and anhydrides, e.g., N-oleyl-sarcosine, sorbitan monooleate, lead naphthenate, dodecenyl-succinic acid and its partial esters and amides, and 4-nonylphenoxy acetic acid; primary, secondary, and tertiary aliphatic and cycloaliphatic amines and amine salts of organic and inorganic acids, e.g., oil-soluble alkylammonium carboxylates; heterocyclic nitrogen containing compounds, e.g., thiadiazoles, substituted imidazolines, and oxazolines; quinolines, quinones, and anthraquinones; propyl gallate; barium dinonyl naphthalene sulfonate; ester and amide derivatives of alkenyl succinic anhydrides or acids, dithiocarbamates, dithiophosphates; amine salts of alkyl acid phosphates and their derivatives.

Examples of suitable lubricity additives include long chain derivatives of fatty acids and natural oils, such as esters, amines, amides, imidazolines, and borates.

Examples of suitable viscosity index improvers include polymethacrylates, copolymers of vinyl pyrrolidone and methacrylates, polybutenes, and styrene-acrylate copolymers.

Examples of suitable pour point and/or floc point depressants include polymethacrylates such as methacrylate-ethylene-vinyl acetate terpolymers; alkylated naphthalene derivatives; and products of Friedel-Crafts catalyzed condensation of urea with naphthalene or phenols.

Examples of suitable detergents and/or dispersants include polybutenylsuccinic acid amides; polybutenyl phosphonic acid derivatives; lonq chain alkyl substituted aromatic sulfonic acids and their salts; and metal salts of alkyl sulfides, of alkyl phenols, and of condensation products of alkyl phenols and aldehydes.

Examples of suitable anti-foam agents include silicone polymers and some acrylates.

Examples of suitable anti-wear and extreme pressure resistance agents include sulfurized fatty acids and fatty acid esters, such as sulfurized octyl tallate; sulfurized terpenes; sulfurized olefins; organopolysulfides; organo phosphorus derivatives including amine phosphates, alkyl acid phosphates, dialkyl phosphates, aminedithiophosphates, trialkyl and triaryl phosphorothionates, trialkyl and triaryl phosphines, and dialkylphosphites, e.g., amine salts of phosphoric acid monohexyl ester, amine salts of dinonylnaphthalene sulfonate, triphenyl phosphate, trinaphthyl phosphate, diphenyl cresyl and dicresyl phenyl phosphates, naphthyl diphenyl phosphate, triphenylphosphorothionate; dithiocarbamates, such as an antimony dialkyl dithiocarbamate; chlorinated and/or fluorinated hydrocarbons, and xanthates.

Under some conditions of operation, it is believed that the presence in lubricants of the types of polyether polyols that have been prominent constituents of most prior art lubricant base stocks taught as useful with fluorocarbon refrigerant working fluids are less than optimally stable and/or inadequately compatible with some of the most useful lubricant additives. Thus, in one embodiment of this invention, it is preferred that the lubricant base stocks and lubricants be substantially free of such polyether polyols. By "substantially free", it is meant that the compositions contain no more than 10 % by weight, preferably no more than 2.6 % by weight, and more preferably no more than 1.2 % by weight of the materials noted.

One major embodiment of the present invention is a refrigerant working fluid comprising both a suitable heat transfer fluid such as a fluorocarbon and a blended lubricant according to this invention. Preferably, the refrigerant working fluid and the blended lubricant should have chemical characteristics and be present in such a proportion to each other that the working fluid remains homogeneous, i.e., free from visually detectable phase separations or turbidity, over the entire range of working temperatures to which the working fluid is exposed during operation of a refrigeration system in which the working fluid is used. This working range may vary from -60° C to as much as +175° C. It is often adequate if the working fluid remains single phase up to +30° C, although it is increasingly more preferable if the single phase behavior is maintained up to 40, 56, 71, 88, or 100 ° C. Similarly, it is often adequate if the working fluid compositions remains a single phase when chilled to 0° C, although it is increasingly more preferable if the single phase behavior persists to -10, -20, -30, -40, or -55 ° C. Single phase mixtures with chlorine free hydrofluorocarbon refrigerant working fluids can often be obtained with the suitable and preferred types of blended esters described above, with the most preferred blended esters most likely to give such single phase behavior over a wide temperature range. It should be noted that it is not necessary for the blending stocks themselves to exhibit such single phase behavior in order for the blends to do so. For example, the tetraester of PE with 3,5,5-trimethylhexanoic acid is almost immiscible with Refrigerant 134a, but a blend of 45 % by weight of this tetraester with 55 % by weight of the tetraester of PE with pentanoic acid exhibits single phase behavior with R134a over a wide temperature range.

Inasmuch as it is often difficult to predict exactly how much lubricant will be mixed with the heat transfer fluid to form a working fluid, it is most preferable if the lubricant composition forms a single phase in all proportions with the heat transfer fluid over the temperature ranges noted above. This however, is a very stringent requirement, and it is often sufficient if there is single phase behavior over the entire temperature range for a working fluid mixture containing up to 1 % by weight of lubricant according to this invention. Single phase behavior over a temperature range for mixtures containing up to 2, 4, 10, and 15, or even 70 or 80, % by weight of lubricant is successively more preferable.

In some cases, single phase behavior is not required. The term "miscible" is used in the refrigeration lubrication art and hereinafter, except when part of the phrase "miscible in all proportions", when two phases are formed but are readily capable of being mixed into a uniform dispersion that remains stable as long as it is at least moderately agitated mechanically. Some refrigeration (and other) compressors are designed to operate satisfactorily with such miscible mixtures of refrigerant working fluid and lubricant. In contrast, mixtures that lead to coagulation or significant thickening and form two or more phases are unacceptable commercially and are designated herein as "immiscible". Any such mixture described below is a comparative example and not an embodiment of the present invention.

Another major embodiment of the invention is the use of a lubricant blend according to the invention, either as total lubricant or lubricant base stock, as a lubricant in a process of operating refrigerating machinery in such a manner that the lubricant is in contact with the refrigerant working fluid.

The ranges and preferred ranges of viscosity and variation of viscosity with temperature for lubricant compositions according to this invention are generally the same as established in the art for lubricants to be used in refrigeration systems together with a heat transfer fluid, particularly a fluorocarbon and/or chlorofluorocarbon heat transfer fluid. In general, it is preferred that lubricants according to this invention have International Organization for Standardization ("ISO") viscosity grade numbers between 10 and 1000. The viscosity ranges for some of the ISO viscosity grade numbers are given in Table 1.

Table 1

| ISO Viscosity Grade Number | Viscosity Range in Centistokes* at 40 ° C | |
|---|---|---|
| | Minimum | Maximum |
| 2 | 1.98 | 2.42 |
| 3 | 2.88 | 3.52 |
| 5 | 4.14 | 5.06 |
| 7 | 6.12 | 7.48 |
| 10 | 9.00 | 11.0 |
| 15 | 13.5 | 16.5 |
| 22 | 19.8 | 24.2 |
| 32 | 28.8 | 35.2 |
| 46 | 41.4 | 50.6 |
| 68 | 61.2 | 74.8 |
| 100 | 90.0 | 110 |
| 150 | 135 | 165 |
| 220 | 198 | 242 |
| 320 | 288 | 352 |
| 460 | 414 | 506 |
| 680 | 612 | 748 |
| 1,000 | 900 | 1,100 |
| 1,500 | 1,350 | 1,650 |

(* 1 cSt = 0.01 m$^2$/s)

The practice of the invention may be further understood and appreciated by consideration of the following examples and comparative examples.

General Ester Synthesis Procedure

The alcohol(s) and acid(s) to be reacted, together with a suitable catalyst such as dibutyltin diacetate, tin oxalate, phosphoric acid, and/or tetrabutyl titanate, were charged into a round bottomed flask equipped with a stirrer, thermometer, nitrogen sparging means, condenser, and a recycle trap. Acid(s) were charged in a 15 % molar excess over the alcohol(s). The amount of catalyst was from 0.02 to 0.1 % by weight of the weight of the total acid(s) and alcohol(s) reacted.

The reaction mixture was heated to a temperature between 220 and 230° C, and water from the resulting reaction was collected in the trap while refluxing acids were returned to the reaction mixture. Partial vacuum was maintained above the reaction mixture as necessary to achieve a reflux rate of between 8 and 12 % of the original reaction mixture volume per hour.

The reaction mixture was sampled occasionally for determination of hydroxyl number, and after the hydroxyl number had fallen below 15.0 mg of KOH per gram of mixture for reactions including divalent acid, or below 5.0 mg of KOH per gram of mixture for other reactions, the majority of the excess acid was removed by distillation after applying the highest vacuum obtainable with the apparatus used, corresponding to a residual pressure of about 0.05 torr, while maintaining the reaction temperature. The reaction mixture was then cooled, and any residual acidity was removed, if desired, by treatment with lime, sodium hydroxide, or epoxy esters. The resulting lubricant or lubricant base stock was dried and filtered before blending and phase compatibility testing.

General Procedure for Phase Compatibility Testing

One milliliter ("ml") of the lubricant to be tested is placed into a thermal shock resistant, volumetrically graduated glass test tube 17 millimeters ("mm") in diameter and 145 mm long. The test tube is then stoppered and placed into a cooling bath regulated to -29 ± 0.2° C. After the tube and contents have equilibrated in the cooling bath for 5 minutes ("min"), sufficient refrigerant working fluid is added to give a total volume of 10 ml.

At least 15 min after the working fluid has been added, during which time the tube and contents have been equilibrating in the cooling bath and the contents may have been agitated if desired, the tube contents are visually examined for evidence of phase separation. If there is any such phase separation, the tube is shaken to determine whether the combination can be rated as miscible or is totally unacceptable.

If there is no evidence of phase separation at -29° C, the temperature of the cooling bath is usually lowered at a rate of 0.3° per min until phase separation is observed. The temperature of first observation of phase separation, if within the range of the cooling equipment used, is then noted as the insolubility onset temperature.

Composition of Blending Stocks

A Type 1 blending stock as described above was prepared by reacting a mixture of alcohol molecules in which 99.4 % were PE molecules, with most of the remainder being DPE molecules, with a mixture of acid molecules that included 99.6 % pentanoic (= n-valeric) acid, with the remainder predominantly 2-methylbutanoic acid. This Type 1 blending stock had an ISO grade of 15.

A first Type 2 blending stock as described above, designated Type 2-1, was prepared by reacting a mixture of alcohol molecules in which 99.4 % were PE molecules, with most of the remainder being DPE molecules, with a mixture of acid molecules that included 46.7 % of pentanoic (= n-valeric) acid, 21.5 % of 2-methylbutanoic acid, and 31.6 % of 3,5,5-trimethylhexanoic acid, with the remainder predominantly other branched $C_9$ monobasic acids. This Type 2-1 blending stock had an ISO grade of 32.

A second Type 2 blending stock as described above, designated Type 2-2, was prepared by reacting a mixture of alcohol molecules in which 99.4 % were PE molecules, with most of the remainder being DPE molecules, with a mixture of acid molecules that included 66.8 % of pentanoic (= n-valeric) acid, 28.4 % of 2-methylbutanoic acid, and 4.6 % of adipic acid, with the remainder being predominantly 3-methylbutanoic acid. This Type 2-2 blending stock had an ISO grade of 32.

A first Type 3 blending stock as described above was prepared by reacting a mixture of alcohol molecules in which 99.4 % are PE molecules, with most of the remainder being DPE molecules, with a mixture of acid molecules that included 61.9 % of pentanoic (= n-valeric) acid, 27.8 % of 2-methylbutanoic acid, and 10.2 % of adipic acid, with the remainder predominantly 3-methylbutanoic acid. This Type 3 blending stock, specifically designated Type 3-1, had an ISO grade of 100.

A second Type 3 blending stock as described above was prepared by reacting a mixture of alcohol molecules in which 99.4 % are PE molecules, with most of the remainder being DPE molecules, with a mixture of acid molecules that included 90 % of 3,5,5-trimethylhexanoic acid, with the remainder predominantly other branched $C_9$ monobasic acids. This Type 3 blending stock, specifically designated Type 3-2, was a solid at room temperature and did not correspond to any ISO grade.

Examples of Specific Blended Esters

Examples of blended esters according to the invention that were made by blending these blending stocks are shown in Table 2.

| TABLE 2 | | | | | | | | | | |
|---|---|---|---|---|---|---|---|---|---|---|
| PERCENT BY WEIGHT IN EXAMPLE BLEND OF: | CHARACTERISTICS OF EXAMPLE BLEND NUMBER: | | | | | | | | | |
| | 1 | 2 | 3 | 4 | 5 | 6 | 7 | 8 | 9 | 10 |
| Blending Stock Type 1 | 49 | 55 | 39 | 19 | 45 | | | | | |
| Blending Stock Type 2-1 | | | | | | 66 | 67 | | | |
| Blending Stock Type 2-2 | 51 | | | | | | | 67 | 61 | 37 |
| Blending Stock Type 3-1 | | | 61 | 81 | 55 | | 33 | 33 | 39 | 63 |
| Blending Stock Type 3-2 | | 45 | | | | 34 | | | | |
| ISO GRADE | 22 | 32 | 46 | 68 | 32 | 46 | 46 | 46 | 50* | 68 |
| ACID VALUE | .010 | .026 | .017 | .012 | .010 | .027 | .017 | .009 | .009 | .011 |
| HYDROXYL VALUE | 5.4 | 3.1 | 4.0 | 4.1 | 4.0 | 3.9 | 3.7 | 6.2 | 6.0 | 5.3 |
| VISCOSITY IN CENTISTOKES AT: | | | | | | | | | | |
| 100° C | 4.52 | 5.70 | 7.81 | 10.2 | 6.08 | 6.87 | 7.32 | 7.68 | 8.1 | 10.2 |
| 40° C | 21.9 | 32.5 | 46.5 | 68.5 | 32.9 | 46.0 | 46.5 | 46.8 | 50.9 | 69.0 |
| VISCOSITY INDEX | 120 | 116 | 137 | 133 | 134 | 104 | 119 | 131 | 130 | 133 |
| FLASH POINT, ° C | 234 | 258 | 260 | 260 | 226 | 260 | 254 | 250 | 250 | 254 |
| POUR POINT, ° C | <-48 | <-48 | nd | nd | -55 | nd | nd | nd | nd | nd |

**Notes for Table 2**

All of the blends in this table had an incompatibility temperature with R134a that was below -57° C.     *Not an official ISO Grade.     "nd" means "not determined".

**Claims**

1. A composition of matter consisting essentially of a blended mixture obtainable from at least 5% by weight of each of at least two of blending stocks designated as Type 1, Type 2, and Type 3, wherein

Type 1 is an ester or mixture of esters having a viscosity of less than 0.18 m²/s (18 centistokes) at 40°C that is obtainable by reacting (i) a mixture of alcohol molecules consisting of molecules selected from DPE (dipentaerythritol), NPG (neopentylglycol), TMP (trimethylolpropane), TME (trimethylolethane) and PE (pentaerythritol) with (ii) a mixture of acid molecules in which at least 75% of the molecules are selected from butanoic acid, 2-methylpropanoic acid, pentanoic acid, 2-methyl-butanoic acid, and 3-methylbutanoic acid and the balance of the acid molecules are selected from other monobasic straight chain carboxylic acids with not more than six carbon atoms and other monobasic branched chain carboxylic acids with not more than nine carbon atoms;

Type 2 is an ester or mixture of esters having a viscosity of 0.288 to 0.506 m²/s (28.8 to 50.6 centistokes) at 40°C that is obtainable by reacting (i) a mixture of alcohol molecules selected from the group consisting of TMP, DTMP (di-trimethylolpropane), PE, and DPE with (ii) a mixture of acid molecules selected from all the straight and branched chain monobasic and dibasic carboxylic acids with from four to twelve carbon atoms each, subject to the constraints that (a) at least 3% of the acid molecules in the mixture are i-$C_5$ acids; (b) the ratio of the % of acid molecules in the mixture that contain 8 or more carbon atoms and are unbranched to the % of acid molecules in the mixture that are both branched and contain not more than six carbon atoms is not greater than 1.56; (c) the % of acid molecules in the mixture that contain at least nine carbon atoms, whether branched or not, is not greater than 81; and (d) either (d) (1) at least 20% of the acid molecules in the mixture are one of the trimethylhexanoic acids and not more than 14% of the carboxyl groups in the acid mixture are part of dibasic acids; or (d) (2) at least 3%, but not more than 18%, of the carboxyl groups in the acid mixture are part of the dibasic acid molecules; not more than 2% of the carboxyl groups in the acid mixture are part of acid molecules with more than two carboxyl groups each; and at least 82% of the monobasic acid molecules in the acid mixture have no more than six carbon atoms each; and

Type 3 is an ester having a viscosity of at least 0.90 m²/s (90 centistokes) at 40°C that is obtainable by reacting (i) a mixture of alcohol molecules selected from the group consisting of TMP, DTMP, PE, DPE, TPE, TTMP (tri-trimethylolpropane) in which mixture of alcohols at least 98% are either PE or DPE molecules and of these at least 80% are PE molecules with (ii) a mixture of acid molecules selected from the group consisting of all the straight or branched chain monobasic carboxylic acids with four to six carbon atoms each, the singly and multiply branched chain monobasic carboxylic acids with from seven to thirteen carbon atoms each, and the dibasic carboxylic acids with from four to ten carbon atoms each, subject to at least one of the groups of constraints (a) that (a) (1) at least 19% of the carboxyl groups in the acid mixture are part of dibasic acid molecules, (a) (2) at least 75% of the carboxyl groups in the acid mixtue that are part of monobasic acid molecules are part of monobasic acid molecules with five carbon atoms each, and (a) (3) the % of the carboxyl groups in the acid mixture that are part of an i-$C_5$ acid is at least 34% of the % of the carboxyl groups in the acid mixture that are part of dibasic acid molecules; or (b) that (b) (1) not more than 14 % of the carboxyl groups in the acid mixture are part of dibasic acids; (b) (2) at least 82 % of the carboxyl groups in the acid mixture are part of monobasic acids containing at least nine carbon atoms and at least one branch; and (b) (3) at least 60 % of the carboxyl groups in the acid mixture are part of trimethyl hexanoic acid molecules.

2. A composition according to claim 1, wherein:

Type 1 is obtainable by reacting (i) a mixture of alcohol molecules in which a total of at least 62 % of the molecules are either TMP or PE with (ii) a mixture of acid molecules in which at least 67 % of the molecules are selected from the group of acids containing five carbon atoms per molecule and at least 60 % of these five carbon acid molecules are pentanoic acid;

Type 2 is obtainable by reacting (i) a mixture of alcohol molecules in which at least 75 % of the molecules are PE molecules with (ii) a mixture of acid molecules in which at least 75 % of the acid molecules contain no more than ten carbon atoms each and which is selected subject to the constraints that (a) at least 7 % of the acid molecules in the mixture are i-$C_5$ acid; (b) the ratio of the % of acid molecules in the mixture that contain 8 or more carbon atoms and are unbranched to the % of acid molecules in the mixture that are both branched and contain not more than six carbon atoms is not greater than 1.21; (c) the % of acid molecules in the mixture that contain at least nine carbon atoms, whether branched or not, is not greater than 67; and (d) either (d) (1) a total of at least 35 % of the acid molecules in the mixture are one of the trimethylhexanoic acids and not more than 10 % of the carboxyl groups in the acid mixture are part of dibasic acid molecules; or (d) (2) at least 7 % of the carboxyl groups in the acid mixture are part of dibasic acid molecules and a total of at least 89 % of the monobasic acid molecules in the acid mixture have either five or six carbon atoms each; and

Type 3    is obtainable by reacting (i) the mixture of alcohol molecules with (ii) a mixture of acid molecules selected subject to at least one of the groups of constraints (a) that (a) (1) at least 23 % of the carboxyl groups in the acid mixture are part of dibasic acid molecules, (a) (2) at least 89 % of the carboxyl groups in the acid mixture that are part of monobasic acid molecules are part of monobasic acid molecules with five carbon atoms each, and (a) (3) the % of the carboxyl groups in the acid mixture that are part of an i-$C_5$ acid is at least 57 % of the % of the carboxyl groups in the acid mixture that are part of dibasic acid molecules; or (b) that (b) (1) not more than 10 % of the carboxyl groups in the acid mixture are part of dibasic acids; (b) (2) at least 82 % of the carboxyl groups in the acid mixture are part of monobasic acids containing at least nine carbon atoms and at least one branch; and (b) (3) a total of at least 71 % of the carboxyl groups in the acid mixture are part of trimethyl hexanoic acid molecules.

3.   A composition according to claim 2, wherein:

Type 1    is obtainable by reacting (i) a mixture of alcohol molecules in which a total of at least 78 % of the molecules are either TMP or PE with (ii) a mixture of acid molecules in which at least 85 % of the molecules are selected from the group of acids containing five carbon atoms per molecule and at least 72 % of these five carbon acid molecules are pentanoic acid;

Type 2    is obtainable by reacting (i) a mixture of alcohol molecules in which at least 85 % of the molecules are PE molecules with (ii) a mixture of acid molecules in which at least 85 % of the acid molecules contain no more than ten carbon atoms each and which is selected subject to the constraints that (a) at least 10 % of the acid molecules in the mixture are i-$C_5$ acid and (d) either (d) (1) a total of at least 35 % of the acid molecules in the mixture are one of the trimethylhexanoic acids and not more than 3 % of the molecules have more than one carboxyl group; or (d) (2) at least 7 % of the carboxyl groups in the acid mixture are part of dibasic acid molecules with from four to ten carbon atoms each and a total of at least 93 % of the monobasic acid molecules in the acid mixture have either five or six carbon atoms each; and

Type 3    is obtainable by reacting (i) the mixture of alcohol molecules with (ii) a mixture of acid molecules selected subject to one of the groups of constraints (a) that (a) (1) at least 27 % of the carboxyl groups in the acid mixture are part of dibasic acid molecules, (a) (2) at least 89 % of the carboxyl groups in the acid mixture that are part of monobasic acid molecules are part of monobasic acid molecules with five carbon atoms each, and (a) (3) the % of the carboxyl groups in the acid mixture that are part of an i-$C_5$ acid is at least 85 % of the % of the carboxyl groups in the acid mixture that are part of dibasic acid molecules; or (b) that (b) (1) not more than 7 % of the carboxyl groups in the acid mixture are part of dibasic acids; (b) (2) at least 82 % of the carboxyl groups in the acid mixture are part of monobasic acids containing at least nine carbon atoms and at least one branch; (b) (3) a total of at least 71 % of the carboxyl groups in the acid mixture are part of trimethyl hexanoic acid molecules.

4.   A composition according to claim 3, wherein:

Type 1    is obtainable by reacting (i) a mixture of alcohol molecules in which a total of at least 89 % of the molecules are either TMP or PE with (ii) a mixture of acid molecules in which at least 92 % of the molecules are selected from the group of acids containing five carbon atoms per molecule and at least 84 % of these five carbon acid molecules are pentanoic acid;

Type 2    is obtainable by reacting (i) a mixture of alcohol molecules in which at least 85 % of the molecules are PE molecules with (ii) a mixture of acid molecules in which at least 90 % of the acid molecules contain no more than ten carbon atoms each and which is selected subject to the constraints that (a) at least 21 % of the acid molecules in the mixture are i-$C_5$ acid; (c) the % of acid molecules in the mixture that contain at least nine carbon atoms, whether branched or not, is not greater than 49; and (d) either (d) (1) a total of at least 41 % of the acid molecules in the mixture are one of the trimethylhexanoic acids and not more than 1 % of the molecules have more than one carboxyl group; or (d) (2) at least 10 % of the carboxyl groups in the acid mixture are part of dibasic acid molecules with from five to seven carbon atoms each and at least 96 % of the monobasic acid molecules in the acid mixture have either five or six carbon atoms each; and

Type 3 is obtainable by reacting (i) the mixture of alcohol molecules with (ii) a mixture of acid molecules selected subject to at least one of the groups of constraints (a) that (a) (1) at least 29 % of the carboxyl groups in the acid mixture are part of dibasic acid molecules with from five to seven carbon atoms each, (a) (2) at least 95 % of the carboxyl groups in the acid mixture that are part of monobasic acid molecules are part of monobasic acid molecules with five carbon atoms each, and (a) (3) the % of the carboxyl groups in the acid mixture that are part of an i-$C_5$ acid is at least 108 % of the % of the carboxyl groups in the acid mixture that are part of dibasic acid molecules; or (b) that (b) (1) not more than 3 % of the carboxyl groups in the acid mixture are part of dibasic acids; (b) (2) at least 92 % of the carboxyl groups in the acid mixture are part of monobasic acids containing at least nine carbon atoms and at least one branch; (b) (3) a total of at least 71 % of the carboxyl groups in the acid mixture are part of trimethyl hexanoic acid molecules.

5. A composition according to claim 4, wherein:

Type 1 is obtainable by reacting (i) a mixture of alcohol molecules in which at least 95 % of the molecules are either TMP or PE with (ii) a mixture of acid molecules in which at least 97 % of the molecules are selected from the group of acids containing five carbon atoms per molecule and at least 93 % of these five carbon acid molecules are pentanoic acid;

Type 2 is obtainable by reacting (i) a mixture of alcohol molecules in which at least 90 % of the molecules are PE molecules with (ii) a mixture of acid molecules in which at least 95 % of the acid molecules contain no more than ten carbon atoms each and which is selected subject to the constraints that (a) at least 28 % of the acid molecules in the mixture are i-$C_5$ acid; (b) the ratio of the % of acid molecules in the mixture that contain 8 or more carbon atoms and are unbranched to the % of acid molecules in the mixture that are both branched and contain not more than five carbon atoms is not greater than 1.21; (c) the % of acid molecules in the mixture that contain at least nine carbon atoms, whether branched or not, is not greater than 49; and (d) either (d) (1) a total of at least 41 % of the acid molecules in the mixture are one of the trimethylhexanoic acids and not more than 1 % of the molecules have more than one carboxyl group; or (d) (2) at least 14 % of the carboxyl groups in the acid mixture are part of dibasic acid molecules and at least 96 % of the monobasic acid molecules in the acid mixture have either five carbon atoms each; and

Type 3 is obtainable by reacting (i) the mixture of alcohol molecules in which at least 98 % are either PE or DPE molecules and of these at least 85 % are PE molecules with (ii) a mixture of acid molecules selected subject to at least one of the groups of constraints (a) that (a) (1) at least 33 % of the carboxyl groups in the acid mixture are part of dibasic acid molecules, (a) (2) at least 98 % of the carboxyl groups in the acid mixture that are part of monobasic acid molecules are part of monobasic acid molecules with five carbon atoms each, and (a) (3) the % of the carboxyl groups in the acid mixture that are part of an i-$C_5$ acid is at least 130 % of the % of the carboxyl groups in the acid mixture that are part of dibasic acid molecules; or (b) that (b) (1) not more than about 1 % of the carboxyl groups in the acid mixture are part of dibasic acids; (b) (2) at least 82 % of the carboxyl groups in the acid mixture are part of monobasic acids containing at least nine carbon atoms and at least one branch; (b) (3) a total of at least 71 % of the carboxyl groups in the acid mixture are part of trimethyl hexanoic acid molecules.

6. A compounded lubricant consisting essentially of at least 95 % by weight of a composition according to claim 5 and a balance of one or more additives selected from oxidation resistance and thermal stability improvers, corrosion inhibitors, metal deactivators, lubricity additives, viscosity index improvers, pour and floc point depressants, detergents, dispersants, antifoaming agents, anti-wear agents, and extreme pressure resistant additives.

7. A compounded lubricant consisting essentially of at least 92 % by weight of a composition according to claims 1, 2 or 3 and a balance of one or more additives selected from oxidation resistance and thermal stability improvers, corrosion inhibitors, metal deactivators, lubricity additives, viscosity index improvers, pour and floc point depressants, detergents, dispersants, antifoaming agents, anti-wear agents, and extreme pressure resistant additives.

8. Use of the composition of any of claims 1 to 7 as a lubricant or lubricant base stock.

9. Use of the composition of any of claims 1 to 7 in refrigeration systems together with a heat transfer fluid.

**10.** Use according to claim 9 wherein said heat transfer fluid is selected from fluorocarbon and/or chlorofluorocarbon heat transfer fluids.

**11.** Use according to claim 10, wherein the heat transfer fluid comprises pentafluoroethane, 1,1-difluoroethane, 1,1,1-trifluoroethane and tetrafluoroethanes.

**12.** Use of claim 11, wherein the tetrafluoroethane is 1,1,1,2-tetrafluoroethane.

**Patentansprüche**

**1.** Stoffzusammensetzung, die im wesentlichen aus einem Gemisch besteht, das aus jeweils wenigstens 5 Gew.-% von wenigstens zwei Mischungskomponenten erhältlich ist, die als Typ 1, Typ 2 und Typ 3 bezeichnet werden, wobei

Typ 1    ein Ester oder Gemisch von Estern mit einer Viskosität von weniger als 0,18 m²/s (18 Centistoke) bei 40°C ist, der bzw. das erhältlich ist durch Umsetzen von (i) einem Gemisch von Alkoholmolekülen, das aus Molekülen besteht, die aus DPE (Dipentaerythrit), NPG (Neopentylglycol), TMP (Trimethylolpropan), TME (Trimethylolethan) und PE (Pentaerythrit) ausgewählt sind, mit (ii) einem Gemisch von Säuremolekülen, wobei wenigstens 75% der Moleküle aus Butansäure, 2-Methylpropansäure, Pentansäure, 2-Methylbutansäure und 3-Methylbutansäure ausgewählt sind und die restlichen Säuremoleküle aus anderen einbasigen geradkettigen Carbonsäuren mit nicht mehr als sechs Kohlenstoffatomen und anderen einbasigen verzweigten Carbonsäuren mit nicht mehr als neun Kohlenstoffatomen ausgewählt sind;

Typ 2    ein Ester oder Gemisch von Estern mit einer Viskosität von 0,288 bis 0,506 m²/s (28,8 bis 50,6 Centistoke) bei 40°C ist, der bzw. das erhältlich ist durch Umsetzen von (i) einem Gemisch von Alkoholmolekülen, die aus der Gruppe ausgewählt sind, die aus TMP, DTMP (Ditrimethylolpropan), PE und DPE besteht, mit (ii) einem Gemisch von Säuremolekülen, die aus allen geradkettigen und verzweigten einbasigen und zweibasigen Carbonsäuren mit jeweils vier bis zwölf Kohlenstoffatomen ausgewählt sind, wobei die Einschränkungen gelten, daß (a) wenigstens 3% der Säuremoleküle in dem Gemisch i-C$_5$-Säuren sind; (b) das Verhältnis des Prozentsatzes an Säuremolekülen in dem Gemisch, die 8 oder mehr Kohlenstoffatome enthalten und unverzweigt sind, zu dem Prozentsatz an Säuremolekülen in dem Gemisch, die sowohl verzweigt sind als auch nicht mehr als sechs Kohlenstoffatome enthalten, nicht größer als 1,56 ist; (c) der Prozentsatz an verzweigten oder unverzweigten Säuremolekülen in dem Gemisch, die wenigstens neun Kohlenstoffatome enthalten, nicht größer als 81 ist; und (d) entweder (d) (1) es sich bei wenigstens 20% der Säuremoleküle in dem Gemisch um eine der Trimethylhexansäuren handelt und nicht mehr als 14% der Carboxygruppen in dem Säuregemisch Bestandteil von zweibasigen Säuren sind; oder (d) (2) wenigstens 3%, aber nicht mehr als 18% der Carboxygruppen in dem Säuregemisch Bestandteil der zweibasigen Säuremoleküle sind, nicht mehr als 2% der Carboxygruppen in dem Säuregemisch Bestandteil von Säuremolekülen mit jeweils mehr als zwei Carboxygruppen sind und wenigstens 82% der einbasigen Säuremoleküle in dem Säuregemisch nicht mehr als jeweils sechs Kohlenstoffatome haben; und

Typ 3    ein Ester mit einer Viskosität von wenigstens 0,90 m²/s (90 Centistoke) bei 40°C ist, der erhältlich ist durch Umsetzen von (i) einem Gemisch von Alkoholmolekülen, die aus der Gruppe ausgewählt sind, die aus TMP, DTMP, PE, DPE, TPE und TTMP (Tritrimethylolpropan) besteht, wobei wenigstens 98% der Moleküle in dem Gemisch von Alkoholen entweder PE- oder DPE-Moleküle sind und von diesen wenigstens 80% PE-Moleküle sind, mit (ii) einem Gemisch von Säuremolekülen, die aus der Gruppe ausgewählt sind, die aus allen geradkettigen oder verzweigten einbasigen Carbonsäuren mit jeweils vier bis sechs Kohlenstoffatomen, den einfach und mehrfach verzweigten einbasigen Carbonsäuren mit jeweils sieben bis dreizehn Kohlenstoffatomen und den zweibasigen Carbonsäuren mit jeweils vier bis zehn Kohlenstoffatomen besteht, wobei wenigstens eine aus der folgenden Gruppe von Einschränkungen gilt: (a) daß (a) (1) wenigstens 19% der Carboxygruppen in dem Säuregemisch Bestandteil von zweibasigen Säuremolekülen sind, (a) (2) wenigstens 75% der Carboxygruppen in dem Säuregemisch, die Bestandteil von einbasigen Säuremolekülen sind, Bestandteil von einbasigen Säuremolekülen mit jeweils fünf Kohlenstoffatomen sind und (a) (3) der Prozentsatz der Carboxygruppen in dem Säuregemisch, die Bestandteil einer i-C$_5$-Säure sind, wenigstens 34% des Prozentsatzes der Carboxygruppen in dem Säuregemisch, die Bestandteil von zweibasigen Säuremolekülen sind, beträgt; oder (b) daß (b) (1) nicht mehr als 14% der Carboxygruppen in dem Säuregemisch Bestandteil von zweibasigen Säuren sind, (b) (2) wenigstens 82% der Carboxygruppen in dem Säuregemisch Bestandteil von einbasigen Säuren sind, die wenigstens neun Kohlenstoffatome und wenigstens eine Verzweigung enthalten, und (b) (3) wenigstens 60% der Carboxygruppen in dem Säuregemisch Bestandteil von Trimethylhexansäuremolekülen sind.

**2.** Zusammensetzung gemäß Anspruch 1, wobei

Typ 1     erhältlich ist durch Umsetzen von (i) einem Gemisch von Alkoholmolekülen, wobei insgesamt wenigstens 62% der Moleküle entweder TMP oder PE sind, mit (ii) einem Gemisch von Säuremolekülen, wobei wenigstens 67% der Moleküle aus der Gruppe von Säuren ausgewählt sind, die fünf Kohlenstoffatome pro Molekül enthalten, und es sich bei wenigstens 60% dieser Säuremoleküle mit fünf Kohlenstoffatomen um Pentansäure handelt;

Typ 2     erhältlich ist durch Umsetzen von (i) einem Gemisch von Alkoholmolekülen, wobei wenigstens 75% der Moleküle PE-Moleküle sind, mit (ii) einem Gemisch von Säuremolekülen, wobei wenigstens 75% der Säuremoleküle nicht mehr als jeweils zehn Kohlenstoffatome enthalten, wobei die Einschränkungen gelten, daß (a) wenigstens 7% der Säuremoleküle in dem Gemisch i-$C_5$-Säuren sind; (b) das Verhältnis des Prozentsatzes an Säuremolekülen in dem Gemisch, die 8 oder mehr Kohlenstoffatome enthalten und unverzweigt sind, zu dem Prozentsatz an Säuremolekülen in dem Gemisch, die sowohl verzweigt sind als auch nicht mehr als sechs Kohlenstoffatome enthalten, nicht größer als 1,21 ist; (c) der Prozentsatz an verzweigten oder unverzweigten Säuremolekülen in dem Gemisch, die wenigstens neun Kohlenstoffatome enthalten, nicht größer als 67 ist; und (d) entweder (d) (1) es sich bei insgesamt wenigstens 35% der Säuremoleküle in dem Gemisch um eine der Trimethylhexansäuren handelt und nicht mehr als 10% der Carboxygruppen in dem Säuregemisch Bestandteil von zweibasigen Säuremolekülen sind; oder (d) (2) wenigstens 7% der Carboxygruppen in dem Säuregemisch Bestandteil von zweibasigen Säuremolekülen sind und insgesamt wenigstens 89% der einbasigen Säuremoleküle in dem Säuregemisch jeweils entweder fünf oder sechs Kohlenstoffatome haben; und

Typ 3     erhältlich ist durch Umsetzen von (i) dem Gemisch von Alkoholmolekülen mit (ii) einem Gemisch von Säuremolekülen, wobei wenigstens eine aus der folgenden Gruppe von Einschränkungen gilt: (a) daß (a) (1) wenigstens 23% der Carboxygruppen in dem Säuregemisch Bestandteil von zweibasigen Säuremolekülen sind, (a) (2) wenigstens 89% der Carboxygruppen in dem Säuregemisch, die Bestandteil von einbasigen Säuremolekülen sind, Bestandteil von einbasigen Säuremolekülen mit jeweils fünf Kohlenstoffatomen sind und (a) (3) der Prozentsatz der Carboxygruppen in dem Säuregemisch, die Bestandteil einer i-$C_5$-Säure sind, wenigstens 57% des Prozentsatzes der Carboxygruppen in dem Säuregemisch, die Bestandteil von zweibasigen Säuremolekülen sind, beträgt; oder (b) daß (b) (1) nicht mehr als 10% der Carboxygruppen in dem Säuregemisch Bestandteil von zweibasigen Säuren sind, (b) (2) wenigstens 82% der Carboxygruppen in dem Säuregemisch Bestandteil von einbasigen Säuren sind, die wenigstens neun Kohlenstoffatome und wenigstens eine Verzweigung enthalten, und (b) (3) insgesamt wenigstens 71% der Carboxygruppen in dem Säuregemisch Bestandteil von Trimethylhexansäuremolekülen sind.

**3.** Zusammensetzung gemäß Anspruch 2, wobei

Typ 1     erhältlich ist durch Umsetzen von (i) einem Gemisch von Alkoholmolekülen, wobei insgesamt wenigstens 78% der Moleküle entweder TMP oder PE sind, mit (ii) einem Gemisch von Säuremolekülen, wobei wenigstens 85% der Moleküle aus der Gruppe von Säuren ausgewählt sind, die fünf Kohlenstoffatome pro Molekül enthalten, und es sich bei wenigstens 72% dieser Säuremoleküle mit fünf Kohlenstoffatomen um Pentansäure handelt;

Typ 2     erhältlich ist durch Umsetzen von (i) einem Gemisch von Alkoholmolekülen, wobei wenigstens 85% der Moleküle PE-Moleküle sind, mit (ii) einem Gemisch von Säuremolekülen, wobei wenigstens 85% der Säuremoleküle nicht mehr als jeweils zehn Kohlenstoffatome enthalten, wobei die Einschränkungen gelten, daß (a) wenigstens 10% der Säuremoleküle in dem Gemisch i-$C_5$-Säuren sind und (d) entweder (d) (1) es sich bei insgesamt wenigstens 35% der Säuremoleküle in dem Gemisch um eine der Trimethylhexansäuren handelt und nicht mehr als 3% der Moleküle mehr als eine Carboxygruppe haben; oder (d) (2) wenigstens 7% der Carboxygruppen in dem Säuregemisch Bestandteil von zweibasigen Säuremolekülen mit jeweils vier bis zehn Kohlenstoffatomen sind und insgesamt wenigstens 93% der einbasigen Säuremoleküle in dem Säuregemisch jeweils entweder fünf oder sechs Kohlenstoffatome haben; und

Typ 3     erhältlich ist durch Umsetzen von (i) dem Gemisch von Alkoholmolekülen mit (ii) einem Gemisch von Säuremolekülen, wobei eine aus der folgenden Gruppe von Einschränkungen gilt: (a) daß (a) (1) wenigstens 27% der Carboxygruppen in dem Säuregemisch Bestandteil von zweibasigen Säuremolekülen sind, (a) (2) wenigstens 89% der Carboxygruppen in dem Säuregemisch, die Bestandteil von einbasigen Säuremolekülen sind, Bestandteil von einbasigen Säuremolekülen mit jeweils fünf Kohlenstoffatomen sind und (a) (3) der Prozentsatz der Carboxygruppen in dem Säuregemisch, die Bestandteil einer i-$C_5$-Säure sind, wenigstens 85% des Prozentsatzes der Carboxygruppen in dem Säuregemisch, die Bestandteil von zweibasigen Säuremolekülen sind, beträgt; oder (b) daß (b) (1) nicht mehr als 7% der Carboxygruppen in dem Säuregemisch Bestandteil von zweibasigen Säuren sind, (b) (2) wenigstens 82% der Carboxygruppen in dem Säuregemisch Bestandteil von einbasigen Säuren sind, die wenigstens neun Kohlenstoffatome und wenigstens eine Verzweigung enthalten, und (b) (3) insgesamt wenigstens 71% der Carboxygruppen in dem Säuregemisch Bestandteil von Trimethylhexansäuremolekülen sind.

**4.**    Zusammensetzung gemäß Anspruch 3, wobei

Typ 1     erhältlich ist durch Umsetzen von (i) einem Gemisch von Alkoholmolekülen, wobei insgesamt wenigstens 89% der Moleküle entweder TMP oder PE sind, mit (ii) einem Gemisch von Säuremolekülen, wobei wenigstens 92% der Moleküle aus der Gruppe von Säuren ausgewählt sind, die fünf Kohlenstoffatome pro Molekül enthalten, und es sich bei wenigstens 84% dieser Säuremoleküle mit fünf Kohlenstoffatomen um Pentansäure handelt;

Typ 2     erhältlich ist durch Umsetzen von (i) einem Gemisch von Alkoholmolekülen, wobei wenigstens 85% der Moleküle PE-Moleküle sind, mit (ii) einem Gemisch von Säuremolekülen, wobei wenigstens 90% der Säuremoleküle nicht mehr als jeweils zehn Kohlenstoffatome enthalten, wobei die Einschränkungen gelten, daß (a) wenigstens 21% der Säuremoleküle in dem Gemisch i-$C_5$-Säuren sind; (c) der Prozentsatz an verzweigten oder unverzweigten Säuremolekülen in dem Gemisch, die wenigstens neun Kohlenstoffatome enthalten, nicht größer als 49 ist; und (d) entweder (d) (1) es sich bei insgesamt wenigstens 41% der Säuremoleküle in dem Gemisch um eine der Trimethylhexansäuren handelt und nicht mehr als 1% der Moleküle mehr als eine Carboxygruppe haben; oder (d) (2) wenigstens 10% der Carboxygruppen in dem Säuregemisch Bestandteil von zweibasigen Säuremolekülen mit jeweils fünf bis sieben Kohlenstoffatomen sind und wenigstens 96% der einbasigen Säuremoleküle in dem Säuregemisch jeweils entweder fünf oder sechs Kohlenstoffatome haben; und

Typ 3     erhältlich ist durch Umsetzen von (i) dem Gemisch von Alkoholmolekülen mit (ii) einem Gemisch von Säuremolekülen, wobei wenigstens eine aus der folgenden Gruppe von Einschränkungen gilt: (a) daß (a) (1) wenigstens 29% der Carboxygruppen in dem Säuregemisch Bestandteil von zweibasigen Säuremolekülen mit jeweils fünf bis sieben Kohlenstoffatomen sind, (a) (2) wenigstens 95% der Carboxygruppen in dem Säuregemisch, die Bestandteil von einbasigen Säuremolekülen sind, Bestandteil von einbasigen Säuremolekülen mit jeweils fünf Kohlenstoffatomen sind und (a) (3) der Prozentsatz der Carboxygruppen in dem Säuregemisch, die Bestandteil einer i-$C_5$-Säure sind, wenigstens 108% des Prozentsatzes der Carboxygruppen in dem Säuregemisch, die Bestandteil von zweibasigen Säuremolekülen sind, beträgt; oder (b) daß (b) (1) nicht mehr als 3% der Carboxygruppen in dem Säuregemisch Bestandteil von zweibasigen Säuren sind, (b) (2) wenigstens 92% der Carboxygruppen in dem Säuregemisch Bestandteil von einbasigen Säuren sind, die wenigstens neun Kohlenstoffatome und wenigstens eine Verzweigung enthalten, und (b) (3) insgesamt wenigstens 71% der Carboxygruppen in dem Säuregemisch Bestandteil von Trimethylhexansäuremolekülen sind.

**5.**    Zusammensetzung gemäß Anspruch 4, wobei

Typ 1     erhältlich ist durch Umsetzen von (i) einem Gemisch von Alkoholmolekülen, wobei wenigstens 95% der Moleküle entweder TMP oder PE sind, mit (ii) einem Gemisch von Säuremolekülen, wobei wenigstens 97% der Moleküle aus der Gruppe von Säuren ausgewählt sind, die fünf Kohlenstoffatome pro Molekül enthalten, und es sich bei wenigstens 93% dieser Säuremoleküle mit fünf Kohlenstoffatomen um Pentansäure handelt;

Typ 2    erhältlich ist durch Umsetzen von (i) einem Gemisch von Alkoholmolekülen, wobei wenigstens 90% der Moleküle PE-Moleküle sind, mit (ii) einem Gemisch von Säuremolekülen, wobei wenigstens 95% der Säuremoleküle nicht mehr als jeweils zehn Kohlenstoffatome enthalten, wobei die Einschränkungen gelten, daß (a) wenigstens 28% der Säuremoleküle in dem Gemisch i-$C_5$-Säuren sind; (b) das Verhältnis des Prozentsatzes an Säuremolekülen in dem Gemisch, die 8 oder mehr Kohlenstoffatome enthalten und unverzweigt sind, zu dem Prozentsatz an Säuremolekülen in dem Gemisch, die sowohl verzweigt sind als auch nicht mehr als fünf Kohlenstoffatome enthalten, nicht größer als 1,21 ist; (c) der Prozentsatz an verzweigten oder unverzweigten Säuremolekülen in dem Gemisch, die wenigstens neun Kohlenstoffatome enthalten, nicht größer als 49 ist; und (d) entweder (d) (1) es sich bei insgesamt wenigstens 41% der Säuremoleküle in dem Gemisch um eine der Trimethylhexansäuren handelt und nicht mehr als 1% der Moleküle mehr als eine Carboxygruppe haben; oder (d) (2) wenigstens 14% der Carboxygruppen in dem Säuregemisch Bestandteil von zweibasigen Säuremolekülen sind und wenigstens 96% der einbasigen Säuremoleküle in dem Säuregemisch jeweils fünf Kohlenstoffatome haben; und

Typ 3    erhältlich ist durch Umsetzen von (i) dem Gemisch von Alkoholmolekülen, wobei wenigstens 98% entweder PE- oder DPE-Moleküle sind und von diesen wenigstens 85% PE-Moleküle sind, mit (ii) einem Gemisch von Säuremolekülen, wobei wenigstens eine aus der folgenden Gruppe von Einschränkungen gilt: (a) daß (a) (1) wenigstens 33% der Carboxygruppen in dem Säuregemisch Bestandteil von zweibasigen Säuremolekülen sind, (a) (2) wenigstens 98% der Carboxygruppen in dem Säuregemisch, die Bestandteil von einbasigen Säuremolekülen sind, Bestandteil von einbasigen Säuremolekülen mit jeweils fünf Kohlenstoffatomen sind und (a) (3) der Prozentsatz der Carboxygruppen in dem Säuregemisch, die Bestandteil einer i-$C_5$-Säure sind, wenigstens 130% des Prozentsatzes der Carboxygruppen in dem Säuregemisch, die Bestandteil von zweibasigen Säuremolekülen sind, beträgt; oder (b) daß (b) (1) nicht mehr als etwa 1% der Carboxygruppen in dem Säuregemisch Bestandteil von zweibasigen Säuren sind, (b) (2) wenigstens 82% der Carboxygruppen in dem Säuregemisch Bestandteil von einbasigen Säuren sind, die wenigstens neun Kohlenstoffatome und wenigstens eine Verzweigung enthalten, und (b) (3) insgesamt wenigstens 71% der Carboxygruppen in dem Säuregemisch Bestandteil von Trimethylhexansäuremolekülen sind.

6.   Compoundiertes Schmiermittel, das im wesentlichen aus wenigstens 95 Gew.-% einer Zusammensetzung gemäß Anspruch 5 besteht, wobei der Rest aus einem oder mehreren Additiven besteht, die aus Oxidationsstabilisatoren und thermischen Stabilisatoren, Korrosionsinhibitoren, Metalldesaktivatoren, Schmierzusätzen, Viskositätsmodifikatoren, Gieß- und Flockpunkterniedrigern, Detergentien, Dispergiermitteln, Schaumverhütungsmitteln, Antiverschleißmitteln und extremdruckresistenten Additiven ausgewählt sind.

7.   Compoundiertes Schmiermittel, das im wesentlichen aus wenigstens 92 Gew.-% einer Zusammensetzung gemäß Anspruch 1, 2 oder 3 besteht, wobei der Rest aus einem oder mehreren Additiven besteht, die aus Oxidationsstabilisatoren und thermischen Stabilisatoren, Korrosionsinhibitoren, Metalldesaktivatoren, Schmierzusätzen, Viskositätsmodifikatoren, Gieß- und Flockpunkterniedrigern, Detergentien, Dispergiermitteln, Schaumverhütungsmitteln, Antiverschleißmitteln und extremdruckresistenten Additiven ausgewählt sind.

8.   Verwendung der Zusammensetzung gemäß einem der Ansprüche 1 bis 7 als Schmiermittel oder Schmiermittelbasis.

9.   Verwendung der Zusammensetzung gemäß einem der Ansprüche 1 bis 7 in Kühl systemen zusammen mit einem Wärmeübertragungsmedium.

10.   Verwendung gemäß Anspruch 9, wobei das Wärmeübertragungsmedium aus Fluorkohlenstoff- und/oder Chlorfluorkohlenstoff-Wärmeübertragungsmedien ausgewählt ist.

11.   Verwendung gemäß Anspruch 10, wobei das Wärmeübertragungsmedium Pentafluorethan, 1,1-Difluorethan, 1,1,1-Trifluorethan und Tetrafluorethane umfaßt.

12.   Verwendung gemäß Anspruch 11, wobei es sich bei dem Tetrafluorethan um 1,1,1,2-Tetrafluorethan handelt.

**Revendications**

1.  Composition de matières consistant essentiellement en un mélange mélangé pouvant être obtenu à partir d'au moins 5% en poids de chacun d'au moins deux produits de mélange désignés par Type 1, Type 2, et Type 3, où

    Type 1    est un ester ou mélange d'esters ayant une viscosité de moins de 0,18 m$^2$/s (18 centistokes) à 40°C, que l'on peut obtenir par réaction (i) d'un mélange de molécules d'alcool consistant en molécules sélectionnées parmi DPE (dipentaérythritol), NPG (néopentylglycol), TMP (triméthylolpropane), TME (triméthyloléthane) et PE (pentaérythritol) avec (ii) un mélange de molécules d'acide où au moins 75% des molécules sont sélectionnées parmi l'acide butanoique, l'acide 2-méthylpropanoïque, l'acide pentanoique, l'acide 2-méthyl-butanoïque, et l'acide 3-méthylbutanoïque et le reste des molécules d'acide est sélectionné parmi d'autres acides carboxyliques monobasiques à chaîne droite avec pas plus de six atomes de carbone et d'autres acides carboxyliques monobasiques à chaîne ramifiée avec pas plus de neuf atomes de carbone;

    Type 2    est un ester ou mélange d'esters ayant une viscosité de 0,288 à 0,506 m$^2$/s (28,8 à 50,6 centistokes) à 40°C, que l'on peut obtenir par réaction de (i) un mélange de molécules d'alcool sélectionnées dans le groupe consistant en TMP, DTMP (di-triméthylopropane), PE, et DPE avec (ii) un mélange de molécules d'acide sélectionnées parmi tous les acides carboxyliques monobasiques et dibasiques à chaîne droite et ramifiée avec de 4 à 12 atomes de carbone chacun, soumis aux contraintes que (a) au moins 3% des molécules d'acide dans le mélange soient d'un acide i-C$_5$; (b) le rapport du % de molécule d'acide dans le mélange qui contiennent 8 atomes de carbone ou plus et ne sont pas ramifiées au % des molécules d'acide dans le mélange qui sont à la fois ramifiées et ne contiennent pas plus de six atomes de carbone, ne dépasse pas 1,56; (c) le % des molécules d'acide dans le mélange qui contiennent au moins 9 atomes de carbone, qu'elles soient ramifiées ou non, ne dépasse pas 81; et (d) que soit (d) (1) au moins 20% des molécules d'acide dans le mélange soient l'un des acides triméthylhexanoïques et que pas plus de 14% des groupes carboxyles dans le mélange d'acides fasse partie des acides dibasiques; ou (d) (2) au moins 3%, mais pas plus de 18%, des groupes carboxyles dans le mélange d'acides fassent partie des molécules d'acide dibasique; pas plus de 2% des groupes carboxyles dans le mélange d'acide fassent partie des molécules d'acide avec plus de deux groupes carboxyles à chaque fois; et au moins 82% des molécules d'acide dibasique dans le mélange d'acides n'ait pas plus de six atomes de carbone chacune; et

    Type 3    est un ester ayant une viscosité d'au moins 0,90 m$^2$/s (90 centistokes) à 40°C que l'on peut obtenir par réaction de (i) un mélange de molécules d'alcool sélectionnées dans le groupe consistant en TMP, DTMP, PE, DPE, TPE, TTMP (tri-trimethylolpropane), mélange d'alcools dans lequel au moins 98% sont des molécules de PE ou de DPE et parmi celles-ci au moins 80% sont des molécules de PE avec (ii) un mélange de molécules d'acide sélectionnées dans le groupe consistant en tous les acides carboxyliques monobasiques à chaîne droite ou ramifiée avec quatre à six atomes de carbone à chaque fois, les acides carboxyliques monobasiques à chaîne ramifiée simplement et de façon multiple avec de sept à treize atomes de carbone et les acides carboxyliques dibasiques avec de quatre à dix atomes de carbone soumis a au moins l'un des groupes de contraintes (a) que (a) (1) au moins 19% des groupes carboxyles dans le mélange d'acides fassent partie des molécules d'acide dibasique, (a) (2) au moins 75% des groupes carboxyles dans le mélange d'acide qui font partie des molécules d'acide monobasique fassent partie des molécules d'acide monobasique avec cinq atomes de carbone à chaque fois, et (a) (3) le % des groupes carboxyles dans le mélange d'acide qui font partie d'un acide i-C$_5$ soit d'au moins 34% du % des groupes carboxyles dans le mélange d'acide qui font partie des molécules d'acide dibasique; ou (b) que (b) (1) pas plus de 14% des groupes carboxyles dans le mélange d'acide fassent partie des acides dibasiques; (b) (2) au moins 82% des groupes carboxyles dans le mélange d'acide fassent partie des acides monobasiques contenant au moins neuf atomes de carbone et au moins une ramification; et (b) (3) au moins 60% des groupes carboxyles dans le mélange d'acide fassent partie des molécules d'acide trimethyl hexanoïque.

2.  Composition selon la revendication 1, où:

    Type 1    peut être obtenu par réaction de (i) un mélange de molécules d'alcool où un total d'au moins 62% des molécules sont soit TMP ou PE avec (ii) un mélange de molécules d'acide où au moins 67% des molécules sont sélectionnées dans le groupe d'acides contenant cinq atomes de carbone par molécule et au moins 60% de ces molécules d'acide à cinq carbones sont de l'acide pentanoïque;

    Type 2    peut être obtenu par réaction de (i) un mélange de molécules d'alcool où au moins 75% des molécules sont des molécules de PE avec (ii) un mélange de molécules d'acide où au moins 75% des molécules d'acide ne contiennent pas plus de 10 atomes de carbone et qui est sélectionné en étant soumis aux contraintes que (a) au moins 7% des molécules d'acide dans le mélange soient de l'acide i-C$_5$; (b) le rapport du % des molécules d'acide dans le mélange qui contiennent 8 atomes de carbone ou plus et ne sont pas ramifiées au % des molécules d'acide dans le mélange qui sont à la fois ramifiées et ne contiennent pas plus de six atomes de carbone ne soit pas plus important que 1,21; (c) le % des molécules d'acide dans le mélange qui contiennent au moins neuf atomes de carbone, qu'elles soeint ramifiées ou non, ne dépasse pas 67; et (d) soit (d) (1) un total d'au moins 35% des molécules d'acide dans le mélange soient l'un des acides triméthylhexanoïques et pas plus de 10% des groupes carboxyles dans le mélange d'acide fassent partie des molécules d'acide dibasique; ou (d) (2) au moins 7% des groupes carboxyles dans le mélange d'acides fassent partie des molécules d'acide dibasique et un total d'au moins 89% des molécules d'acide monobasique dans le mélange d'acides ait cinq ou six atomes de carbone; et

Type 3    peut être obtenu par réaction (i) du mélange de molécules d'alcool avec (ii) un mélange de molécules d'acide sélectionnées en étant soumises à au moins l'un des groupes de contraintes (a) que (a) (1) au moins 23% des groupes carboxyles dans le mélange d'acide fassent partie des molécules d'acide dibasique, (a) (2) au moins 89% des groupes carboxyles dans le mélange d'acide qui font partie des molécules d'acide monobasique, fassent partie des molécules d'acide monobasique avec cinq atomes de carbone et (a) (3) le % des groupes carboxyles dans le mélange d'acide qui font partie d'un acide i-C$_5$ soit au moins 57% du % des groupes carboxyles dans le mélange d'acide qui font partie des molécules d'acide dibasique; ou (b) que (b) (1) pas plus de 10% des groupes carboxyles dans le mélange d'acide fassent partie des acides dibasiques; (b) (2) au moins 82% des groupes carboxyles dans le mélange d'acide fassent partie des acides monobasiques contenant au moins neuf atomes de carbone et au moins une ramification; et (b) (3) un total d'au moins 71% des groupes carboxyles dans le mélange d'acide fasse partie des molécules d'acide triméthyl hexanoïque.

3.   Composition selon la revendication 2, où:

Type 1    peut être obtenu par réaction de (i) un mélange de molécules d'alcool où un total d'au moins 78% des molécules sont soit TMP ou PE avec (ii) un mélange de molécules d'acide où au moins 85% des molécules sont sélectionnées dans le groupe d'acides contenant cinq atomes de carbone par molécule et au moins 72% de ces molécules d'acide à cinq carbones sont de l'acide pentanoïque;

Type 2    peut être obtenu par réaction de (i) un mélange de molécules d'alcool où au moins 85% des molécules sont des molécules de PE avec (ii) un mélange de molécules d'acide où au moins 85% des molécules d'acide ne contiennent pas plus de dix atomes de carbone et qui est sélectionné en étant sujet aux contraintes que (a) au moins 10% des molécules d'acide dans le mélange soient l'acide i-C$_5$ et (d) soit (d) (1) un total d'au moins 35% des molécules d'acide dans le mélange soit l'un des acides triméthylhexanoïques et pas plus de 3% des molécules aient plus d'un groupe carboxyle; ou (d) (2) au moins 7% des groupes carboxyles dans le mélange d'acides fassent partie des molécules d'acide dibasique avec de quatre à dix atomes de carbone chaque fois et un total d'au moins 93% des molécules d'acide monobasique dans le mélange d'acides ait soit cinq ou six atomes de carbone chaque fois; et

Type 3    peut être obtenu par réaction (i) du mélange de molécules d'alcool avec (ii) un mélange de molécules d'acide sélectionnées en étant soumises à l'un des groupes de contrainte (a) que (a) (1) au moins 27% des groupes carboxyles dans le mélange d'acide fassent partie des molécules d'acide dibasique, (a) (2) au moins 89% des groupes carboxyles dans le mélange d'acides qui font partie des molécules d'acide monobasique fassent partie des molécules d'acide monobasique avec cinq atomes de carbone à chaque fois et (a) (3) le % des groupes carboxyles dans le mélange d'acides qui font partie d'un acide i-C$_5$ soit d'au moins 85% du % des groupes carboxyles dans le mélange d'acides qui font partie des molécules d'acide dibasique; ou (b) que (b) (1) pas plus de 7% des groupes carboxyles dans le mélange d'acides fassent partie des acides dibasiques; (b) (2) au moins 82% des groupes carboxyles dans le mélange d'acides fassent partie des acides monobasiques contenant neuf atomes de carbone et au moins une ramification; (b) (3) un total d'au moins 71% des groupes carboxyles dans le mélange d'acides fasse partie des molécules d'acide triméthyl hexanoïque.

4.   Composition selon la revendication 3, où;

Type 1    peut être obtenu par réaction de (i) un mélange de molécules d'alcool où un total d'au moins 89% des molécules sont soit TMP ou PE avec (ii) un mélange de molécules d'acide où au moins 92% des molécules sont sélectionnées dans le groupe d'acides contenant cinq atomes de carbone par molécule et au moins 84% de ces molécules d'acide à cinq carbones sont l'acide pentanoïque;

Type 2 peut être obtenu par réaction de (i) un mélange de molécules d'alcool où au moins 85% des molécules sont des molécules de PE avec (ii) un mélange de molécules d'acide où au moins 90% des molécules d'acide ne contiennent pas plus de dix atomes de carbone et qui est sélectionné en étant soumis aux contraintes que (a) au moins 21% des molécules d'acide dans le mélange soient de l'acide $i\text{-}C_5$; (c) le % des molécules d'acide dans le mélange qui contiennent au moins neuf atomes de carbone, quelles soient ramifiées ou non, ne dépasse pas 49; et (d) soit (d) (1) un total d'au moins 41% des molécules d'acide dans le mélange soit l'un des acides triméthylhexanoïques et pas plus de 1% des molécules ait plus d'un groupe carboxyle; ou (d) (2) au moins 10% des groupes carboxyles dans le mélange d'acides fassent partie de molécules d'acide dibasique avec de cinq à sept atomes de carbone à chaque fois et au moins 96% des molécules d'acide monobasique dans le mélange d'acide aient soit cinq ou six atomes de carbone à chaque fois; et

Type 3 peut être obtenu par réaction (i) du mélange de molécules d'alcool avec (ii) un mélange de molécules d'acide sélectionnées en étant soumises à au moins l'un des groupes de contraintes (a) que (a) (1) au moins 29% des groupes carboxyles dans le mélange d'acide fassent partie des molécules d'acide dibasique avec de cinq à sept atomes de carbone à chaque fois, (a) (2) au moins 95% des groupes carboxyles dans le mélange d'acide qui font partie des molécules d'acide monobasique fassent partie des molécules d'acide monobasique avec cinq atomes de carbone à chaque fois, et (a) (3) le % des groupes carboxyles dans le mélange d'acide, qui font partie d'un acide $i\text{-}C_5$, soit d'au moins 108% du % des groupes carboxyles dans le mélange d'acides qui font partie des molécules d'acide dibasique; ou (b) que (b) (1) pas plus de 3% des groupes carboxyles dans le mélange d'acides fassent partie des acides dibasiques; (b) (2) au moins 92% des groupes carboxyles dans le mélange d'acides fassent partie des acides monobasiques contenant au moins neuf atomes de carbone et au moins une ramification; (b) (3) un total d'au moins 71% des groupes carboxyles dans le mélange d'acide fasse partie des molécules d'acide triméthyl hexanoïque.

5. Composition selon la revendication 4, où:

Type 1 peut être obtenu par réaction de (i) un mélange de molécules d'alcool où au moins 95% des molécules sont soit TMP ou PE avec (ii) un mélange de molécules d'acide où au moins 97% des molécules sont sélectionnées dans le groupe d'acides contenant cinq atomes de carbone par molécule et au moins 93% de ces molécules d'acide à cinq carbones sont l'acide pentanoïque;

Type 2 peut être obtenu par réaction de (i) un mélange de molécules d'alcool où au moins 90% des molécules sont des molécules de PE avec (ii) un mélange de molécules d'acide où au moins 95% des molécules d'acide ne contiennent pas plus de dix atomes de carbone et qui est sélectionné en étant soumis aux contraintes que (a) au moins 28% des molécules d'acide dans le mélange soient de l'acide $i\text{-}C_5$; (b) le rapport du % des molécules d'acide dans le mélange qui contiennent 8 atomes de carbone ou plus et ne sont pas ramifiées au % des molécules d'acide dans le mélange qui sont à la fois ramifiées et ne contiennent pas plus de cinq atomes de carbone ne dépasse pas 1,21; (c) le % des molécules d'acide dans le mélange qui contiennent au moins neuf atomes de carbone, qu'elles soient ramifiées ou non, ne dépasse pas 49; et (d) soit (d) (1) un total d'au moins 41% des molécules d'acide dans le mélange soit l'un des acides triméthylhexanoïques et pas plus de 1% des molécules ait plus d'un groupe carboxyle; ou (d) (2) au moins 14% des groupes carboxyles dans le mélange d'acide fassent partie des molécules d'acide dibasique et au moins 96% des molécules d'acide monobasique dans le mélange d'acide aient chacune cinq atomes de carbone; et

Type 3 peut être obtenu par réaction de (i) le mélange des molécules d'alcool où au moins 98% sont des molécules de PE ou de DPE et parmi celles-ci, au moins 85% sont des molécules de PE avec (ii) un mélange de molécules d'acide sélectionnées en étant soumises à au moins l'un des groupes de contraintes (a) que (a) (1) au moins 33% des groupes carboxyles dans le mélange d'acides fassent partie des molécules dibasiques, (a) (2) au moins 98% des groupes carboxyles dans le mélange d'acides fassent partie des molécules d'acide monobasique avec cinq atomes de carbone à chaque fois et (a) (3) le % des groupes carboxyles dans le mélange d'acides qui font partie d'un acide $i\text{-}C_5$ soit d'au moins 130% du % des groupes carboxyles dans le mélange d'acides qui font partie des molécules d'acide dibasique; ou (b) que (b) (1) pas plus d'environ 1% des groupes carboxyles dans le mélange d'acides fasse partie des acides dibasiques; (b) (2) au moins 82% des groupes carboxyles dans le mélange d'acide fassent partie des acides monobasiques contenant au moins neuf atomes de carbone et au moins une ramification; (b) (3) un total d'au moins 71% des groupes carboxyles dans le mélange d'acide fasse partie des molécules d'acide triméthyl hexanoïque.

6. Lubrifiant composé consistant essentiellement en au moins 95% en poids d'une composition selon la revendication 5 et le reste étant un ou plusieurs additifs sélectionnés parmi les agents améliorant la résistance à l'oxydation et la stabilité thermique, les inhibiteurs de corrosion, les désactivateurs de métaux, les additifs d'onctuosité, les agents améliorant l'indice de viscosité, les agents abaissant le point de versement et de floculation, les détergents, les dispersants, les agents antimousse, les agents anti-usure, et les additifs résistants extrême pression.

7. Lubrifiant composé consistant essentiellement en au moins 92% en poids d'une composition selon les revendications 1,2 ou 3 et le reste étant un ou plusieurs additifs sélectionnés parmi des agents améliorant la résistance à l'oxydation et la stabilité thermique, des inhibiteurs de corrosion, des désactivateurs de métaux, des additifs d'onctuosité, des agents améliorant l'indice de viscosité, des agents abaissant le point de versement et de floculation, des détergents, des dispersants, des agents antimousse, des agents anti-usure, et des additifs résistants extrême pression.

8. Utilisation de la composition de l'une des revendications 1 à 7 en tant que lubrifiant ou produit de base de lubrifiant.

9. Utilisation de la composition de l'une des revendications 1 à 7 dans des systèmes de réfrigération avec un fluide de transfert de chaleur.

10. Utilisation selon la revendication 9 où ledit fluide de transfert de chaleur est sélectionné parmi des fluides de transfert de chaleur de fluorocarbone et/ou chlorofluorocarbone.

11. Utilisation selon la revendication 10, où le fluide de transfert de chaleur comprend du pentafluoroéthane, du 1,1-difluoroéthane, du 1,1,1-trifluoroéthane et des tétrafluoroéthanes.

12. Utilisation de la revendication 11, où le tétrafluoroéthane est le 1,1,1,2-tétrafluoroéthane.